# EUROPEAN PATENT SPECIFICATION

(11) **EP 3 077 652 B1**
(45) Date of publication and mention of the grant of the patent: **11.10.2017**
(21) Application number: 14816350.4
(22) Date of filing: 04.11.2014
(51) Int. Cl.: F02G 5/00, F02G 5/02, F02G 5/04, F01N 5/00, F01N 5/02

(54) **SYSTEM FOR RECOVERING HEAT IN A CHP-PLANT**
SYSTEM ZUR RÜCKGEWINNUNG VON WÄRME IN EINER CHP-ANLAGE
SYSTÈME POUR LA RÉCUPÉRATION DE CHALEUR DANS UNE CENTRALE ÉLECTROCALOGÈNE

(30) Priority: 15.11.2013 FI 20136124
(43) Date of publication of application: 12.10.2016
(73) Proprietor: Wärtsilä Finland Oy, 65380 Vaasa (FI)
(72) Inventor: ANDERSSON, Jan, FI-65100 Vaasa (FI)
(74) Representative: Berggren Oy, Helsinki & Oulu
(86) International application number: PCT/FI2014/050825
(87) International publication number: WO 2015/071533

(56) References cited:
- DE-A1- 3 406 355
- DE-A1-102007 063 141
- US-A1- 2009 295 157
- US-B1- 6 729 133

## Description

### TECHNICAL FIELD

The present invention concerns a system for recovering heat from a combined heat and power plant comprising internal combustion engine, said system comprising:
- an exhaust heat exchanger is provided for recovering heat from exhaust gases of the engine,
- a cooling liquid heat exchanger is provided for recovering heat from a cooling liquid circuit of the engine,
- a lubrication oil heat exchanger is provided for recovering heat from a lubrication oil circuit of the engine,
- said exhaust heat exchanger, cooling liquid heat exchanger and lubrication oil heat exchanger are connected in a heating circuit having also a district heating heat exchanger for providing heat to a district heating consumer circuit.

### BACKGROUND OF THE INVENTION

A combined heat and power plant (CHP-plant) comprises basically an internal combustion engine which runs on gas or liquid fuel and thus converts chemical energy in to both electric and thermal energy. As the amount of electric energy available from an internal combustion engine is limited for being around 30% to 50%, the rest of the energy released from the fuel is in the form of thermal energy i.e. heat. Thus the better the heat recovery and utilization is from the CHP-plant the better is the overal efficiency.

A patent document DE2726971 A1 discloses that a district heating power station has a gas turbine, the exhaust gases of which flow through a waste heat boiler and an aftercooler in succession before being led to the chimney as flue gases. By means of an intermediate circuit the exhaust gas heat is transmitted in a heat exchanger to the energy transfer medium of a district heating network, this energy transfer medium, with the aid of a series connection, first flowing through the aftercooler and then through the heat exchanger. The utilisation factor E of the district heating power station can thereby be successfully improved. Document US6729133 discloses another CHP-plant.

### SUMMARY OF THE INVENTION

The objective of the present invention is to improve the efficiency of a combined heat and power plant.

The present invention is characterized by what is said in the characterizing part of the patent claim 1. Thus the present invention concerns a system for recovering heat from a combined heat and power plant comprising an internal combustion engine and a heating circuit for heating liquid to circulate, said system comprising:
- an exhaust heat exchanger is provided for recovering heat from exhaust gases of the engine,
- a cooling liquid heat exchanger is provided for recovering heat from a cooling liquid circuit of the engine,
- a lubrication oil heat exchanger is provided for recovering heat from a lubrication oil circuit of the engine,
- said exhaust heat exchanger, cooling liquid heat exchanger and lubrication oil heat exchanger are connected in the heating circuit having also a district heating heat exchanger for providing heat to a district heating consumer network,
characterised in that,
- the cooling liquid heat exchanger and the lubrication oil heat exchanger are connected in a channel parallel to a channel wherein the exhaust heat exchanger is connected, so that the heating liquid flow after the district heating heat exchanger can be divided in said parallel channels.

The present system enables an improved efficiency due to the better control of the different heat exchangers of the CHP-plant. This better control enables high temperature differences (i.e. change of temperature of a medium flowing through the heat exchanger, both in a primary circuit and in a secondary circuit of the heat exchanger) over the heat exchangers and thus maximal heat recovery from various heat sources of the CHP-plant to the heating liquid running through the heat exchangers and then distributed further to the district heating consumer circuit. Thus the present invention achieves the objective of improving the efficiency of a CHP-plant. Furthermore the present invention may reduce a need to use of a separate exhaust gas economizer/aftercooler in certain applications.

According to an embodiment the heating circuit comprise means to control the division of the flow to the parallel channels. The purpose of this feature is to ensure that the running parameters are as efficient as possible. The temperatures of returning lubrication oil and cooling liquid to the engine need to be maintained within a certain range and therefore it is preferred to take all excess heat away, but not more so that the returning lubrication oil or cooling liquid temperature is at the lower limit of the operational range for the engine. That is possible by dividing the flow to said parallel channels and controlling the amount of flow in each channel.

The previously explained flow division can be done by different flow controlling means and among the preferred embodiments are the following. The channel to exhaust heat exchanger comprises a pump for controlling the flow in said channel. Another embodiment which can be instead or in addition to the previous one is that the channel to the cooling liquid heat exchanger comprises a pump for controlling the flow in said channel. If there are pumps in both channels the division of the flows is relatively simple to control. Also according to an embodiment an intersection (or proximity of an intersection) of the channels comprises a non-return valve to prevent the heating liquid to circulate in an opposite direction. Thus the flows circulate always to the correct designed direction.

According to an embodiment the district heating heat exchanger is provided with a bypass channel for bypassing or to regulate the flow or temperature difference over the district heating heat exchanger. This enables an optimal heat transfer from the CHP-plant to the district heating consumer network.

### BRIEF DESCRIPTION OF THE DRAWINGS

The present invention and its embodiments are in the following presented in connection with the attached drawings wherein:
- Fig. 1: presents a basic configuration of the present system,
- Fig. 2: presents a further embodiment ot the present system,
- Fig. 3: presents still a further embodiment ot the present system.

### DETAILLED DESCRIPTION

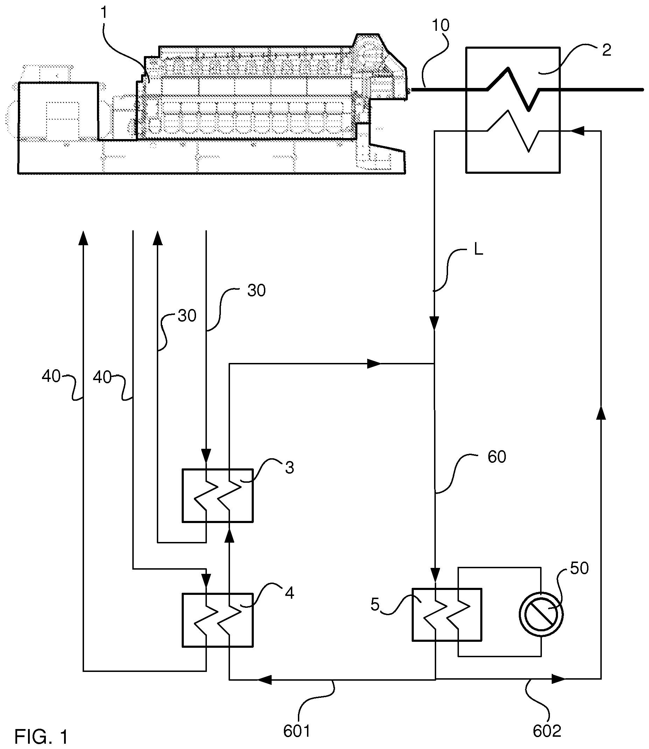

In Fig. 1 it is presented a system for recovering heat from a combined heat and power plant comprising an internal combustion engine 1 and a heating circuit 60 for heating liquid L to circulate, said system comprising:
- an exhaust heat exchanger 2 is provided for recovering heat from exhaust gases 10 of the engine 1,
- a cooling liquid heat exchanger 3 is provided for recovering heat from a cooling liquid circuit 30 of the engine 1,
- a lubrication oil heat exchanger 4 is provided for recovering heat from a lubrication oil circuit 40 of the engine 1,
- said exhaust heat exchanger 2, cooling liquid heat exchanger 3 and lubrication oil heat exchanger 4 are connected in the heating circuit 60 having also a district heating heat exchanger 5 for providing heat to a district heating consumer network 50,
- the cooling liquid heat exchanger 3 and the lubrication oil heat exchanger 4 are connected in a channel 601 parallel to a channel 602 wherein the exhaust heat exchanger 2 is connected, so that the heating liquid L flow after the district heating heat exchanger 5 can be divided in said parallel channels 601, 602.

The system of fig. 1 enables a very high temperature difference over the heat exchangers 2, 3, 4. This very high temperature difference is achieved so that the heating liquid flowing into the heat exchanger is as cool as possible and then it can receive the maximum amount of heat from the other circuit or medium i.e. from the exhaust gas, engine cooling liquid or lubrication oil. A detailled study of the process has revealed that by separating the exhaust gas heat exchanger to a parallel channel from the channel comprising the cooling liquid heat exchanger 3 and the lubrication oil heat exchanger 4, the inlet temperature of the heating liquid to said heat exchangers 2, 3, 4 can be decreased so that the high temperature difference can be achieved. By configuring the cooling liquid heat exchanger 3 and the lubrication oil heat exchanger 4 so that these are connected in series it is possible to maintain the proper operational temperature of the lubrication oil and cooling liquid but still achieve the high efficiency of the heat recovery.

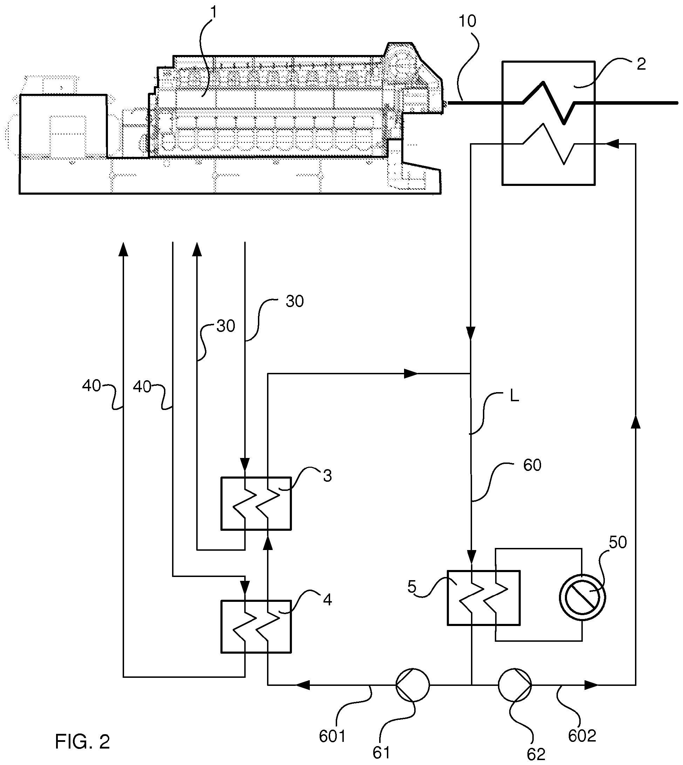

In Fig. 2 it is presented an embodiment similar to what is presented at Fig. 1 but the heating circuit 60 comprise means 61, 62 to control the division of the flow to the parallel channels 601, 602. The embodiment presents that the channel 602 to exhaust heat exchanger 2 comprises a pump 62 for controlling the flow in said channel 602. The system can be operated with only one pump, but a better controllability can be achieved if also the channel 601 to the cooling liquid heat exchanger 3 comprises a pump 61 for controlling the flow in said channel 601. These embodiments enables thus very good control over the heat exchangers 2, 3 and 4 and makes it possible to deliver high temperature heating liquid L to the district heating heat exchanger 5.

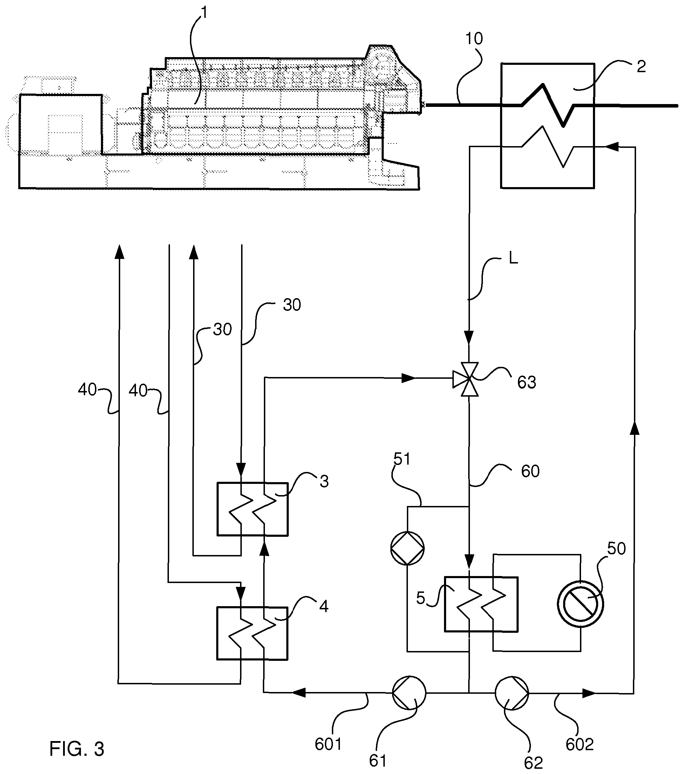

In Fig. 3 it is presented still a further embodiment of figures 1 and 2. The district heating heat exchanger 5 is provided with a bypass channel 51 for bypassing or to regulate the flow or temperature difference over the district heating heat exchanger 5. This feature gives more controllability of the heat delivery to the district heating consumer network 50. In addition, it can be used for example in pre-heating phase of of the CHP-plant etc. Still according to an embodiment of the system an intersection of the channels 601, 602 comprises a non-return valve 63 to prevent the heating liquid L to circulate in an opposite direction. This feature helps to maintain the steady flow circumstances and it is independent of the other further embodiments of the present system as described above ot at the dependent patent claims.

As evident to those skilled in the art, the invention and its embodiments are not limited to the above-described embodiment examples. Expressions representing the existence of characteristics, such as "the engine comprises a cooling liquid circuit", are non-restrictive such that the description of characteristics does not exclude or prerequisite the existence of such other characteristics which are not presented in the independent or dependent claims.

### Reference signs used in figures

- 1: engine
- 10: exhaust gases
- 2: exhaust heat exchanger
- 3: cooling liquid heat exchanger
- 30: cooling liquid circuit
- 4: lubrication oil heat exchanger
- 40: lubrication oil circuit
- 5: district heating heat exchanger
- 50: district heating consumer network
- 51: bypass channel
- 60: heating circuit
- 601: channel
- 602: channel
- 61: pump
- 62: pump
- 63: non-return valve
- 7: auxiliary boiler
- L: heating liquid

## Claims

1. A system for recovering heat from a combined heat and power plant comprising an internal combustion engine (1) and a heating circuit (60) for heating liquid (L) to circulate, said system comprising:
- an exhaust heat exchanger (2) is provided for recovering heat from exhaust gases (10) of the engine (1),
- a cooling liquid heat exchanger (3) is provided for recovering heat from a cooling liquid circuit (30) of the engine (1),
- a lubrication oil heat exchanger (4) is provided for recovering heat from a lubrication oil circuit (40) of the engine (1),
- said exhaust heat exchanger (2), cooling liquid heat exchanger (3) and lubrication oil heat exchanger (4) are connected in the heating circuit (60) having also a district heating heat exchanger (5) for providing heat to a district heating consumer network (50),
**characterised in that,**
- the cooling liquid heat exchanger (3) and the lubrication oil heat exchanger (4) are connected in a channel (601) parallel to a channel (602) wherein the exhaust heat exchanger (2) is connected, so that the heating liquid (L) flow after the district heating heat exchanger (5) can be divided in said parallel channels (601, 602).

2. The system of claim 1, **characterised in that** the heating circuit (60) comprise means (61, 62) to control the division of the flow to the parallel channels (601, 602).

3. The system of claim 2, **characterised in that** the channel (602) to exhaust heat exchanger (2) comprises a pump (62) for controlling the flow in said channel (602).

4. The system of claim 1, **characterised in that** the channel (601) to the cooling liquid heat exchanger (3) comprises a pump (61) for controlling the flow in said channel (601).

5. The system of claim 1, **characterised in that** the district heating heat exchanger (5) is provided with a bypass channel (51) for bypassing or to regulate the flow or temperature difference over the district heating heat exchanger (5).

6. The system of claim 1, **characterised in that** an intersection of the channels (601, 602) comprises a non-return valve (63) to prevent the heating liquid (L) to circulate in an opposite direction.

## Patentansprüche

1. System zur Rückgewinnung von Wärme aus einer kombinierten Wärme- und Kraftanlage, das einen Verbrennungsmotor (1) und einen Heizkreislauf (60) zum Zirkulieren von Heizflüssigkeit (L) umfasst, wobei das System Folgendes umfasst:
- einen Abgaswärmetauscher (2), der zur Rückgewinnung von Wärme aus Abgasen (10) des Motors (1) bereitgestellt ist,
- einen Kühlflüssigkeitswärmetauscher (3), der zur Rückgewinnung von Wärme aus einem Kühlflüssigkeitskreislauf (30) des Motors (1) bereitgestellt ist,
- einen Schmierölwärmetauscher (4), der zur Rückgewinnung von Wärme aus einem Schmierölkreislauf (40) des Motors (1) bereitgestellt ist,
- wobei der Abgaswärmetauscher (2), Kühlflüssigkeitswärmetauscher (3) und Schmierölwärmetauscher (4) in dem Heizkreislauf (60) verbunden sind, der auch einen Fernwärme-Wärmetauscher (5) zur Bereitstellung von Wärme an ein Fernwärmeverbrauchernetzwerk (50) aufweist,
**dadurch gekennzeichnet, dass**
- der Kühlflüssigkeitswärmetauscher (3) und der Schmierölwärmetauscher (4) in einem Kanal (601) parallel zu einem Kanal (602) verbunden sind, in dem der Abgaswärmetauscher (2) verbunden ist, so dass die Strömung von Heizflüssigkeit (L) nach dem Fernwärme-Wärmetauscher (5) in die parallelen Kanäle (601, 602) aufgeteilt werden kann.

2. System nach Anspruch 1, **dadurch gekennzeichnet, dass** der Heizkreislauf (60) Mittel (61, 62) umfasst, um die Aufteilung der Strömung auf die parallelen Kanäle (601, 602) zu steuern.

3. System nach Anspruch 2, **dadurch gekennzeichnet, dass** der Kanal (602) zu dem Abgaswärmetauscher (2) eine Pumpe (62) zum Steuern der Strömung in dem Kanal (602) umfasst.

4. System nach Anspruch 1, **dadurch gekennzeichnet, dass** der Kanal (601) zu dem Kühlflüssigkeitswärmetauscher (3) eine Pumpe (61) zum Steuern der Strömung in dem Kanal (601) umfasst.

5. System nach Anspruch 1, **dadurch gekennzeichnet, dass** der Fernwärme-Wärmetauscher (5) mit einem Umgehungskanal (51) zum Umgehen oder Regeln des Strömungs- oder Temperaturunterschieds in dem Fernwärme-Wärmetauscher (5) bereitgestellt ist.

6. System nach Anspruch 1, **dadurch gekennzeichnet, dass** eine Kreuzung der Kanäle (601, 602) ein Rückschlagventil (63) umfasst, um die Heizflüssigkeit (L) daran zu hindern, in eine entgegengesetzte Richtung zu zirkulieren.

## Revendications

1. Système de récupération de chaleur à partir d'une centrale électrocalogène mixte comprenant un moteur à combustion interne (1) et un circuit de chauffage (60) pour chauffer un liquide (L) à mettre en circulation, ledit système comprenant :
- un échangeur thermique d'échappement (2) est prévu pour récupérer la chaleur provenant des gaz d'échappement (10) du moteur (1),
- un échangeur thermique de liquide de refroidissement (3) est prévu pour récupérer la chaleur provenant d'un circuit de liquide de refroidissement (30) du moteur (1),
- un échangeur thermique d'huile de lubrification (4) est prévu pour récupérer la chaleur provenant d'un circuit de lubrification (40) du moteur (1),
- ledit échangeur thermique d'échappement (2), échangeur thermique de liquide de refroidissement (3) et échangeur thermique d'huile lubrification (4) sont raccordés dans le circuit de chauffage (60) ayant aussi un échangeur thermique de chauffage d'arrondissement (5) pour fournir de la chaleur à un réseau consommateur de chauffage d'arrondissement (50),
**caractérisé en ce que**
- l'échangeur thermique de liquide de refroidissement (3) et l'échangeur thermique d'huile de lubrification (4) sont raccordés dans un canal (601) parallèle à un canal (602), dans lequel l'échangeur thermique d'échappement (2) est raccordé, de sorte que le liquide de chauffage (L) s'écoule après que l'échangeur thermique de chauffage d'arrondissement (5) puisse être divisé en lesdits canaux parallèles (601, 602).

2. Système selon la revendication 1, **caractérisé en ce que** le circuit de chauffage (60) comprend des moyens (61, 62) pour commander la division de flux en canaux parallèles (601, 602).

3. Système selon la revendication 2, **caractérisé en ce que** le canal (602) vers l'échangeur thermique d'échappement (2) comprend une pompe (62) pour commander le flux dans ledit canal (602).

4. Système selon la revendication 1, **caractérisé en ce que** le canal (601) vers l'échangeur thermique de liqudie de refroidissement (3) comprend une pompe (61) pour commander le flux dans ledit canal (601).

5. Système selon la revendication 1, **caractérisé en ce que** l'échangeur thermique de chauffage d'arrondissement (5) est pourvu d'un canal de dérivation (51) pour dériver ou réguler le flux ou la différence de température sur l'échangeur thermique de chauffage d'arrondissement (5).

6. Système selon la revendication 1, **caractérisé en ce qu'**une intersection des canaux (601, 602) comprend une soupape antiretour (63) pour empêcher le liquide de chauffage (L) de circuler dans une direction opposée.
